# EUROPÄISCHE PATENTSCHRIFT

(11) **EP 3 721 764 B1**
(45) Veröffentlichungstag und Bekanntmachung des Hinweises auf die Patenterteilung: **09.10.2024**
(21) Anmeldenummer: 20164875.5
(22) Anmeldetag: 23.03.2020
(51) Int. Cl.: A47K 5/12, A47K 10/36, H01M 50/213, A47K 10/32

(54) **SPENDER ZUR AUSGABE EINES BAHNFÖRMIGEN FLÄCHENPRODUKTS, INSBESONDERE AUS PAPIER, ODER ZUR AUSGABE EINES FLUIDS**
DISPENSER FOR DISPENSING A SHEET-LIKE FLAT PRODUCT, IN PARTICULAR ONE MADE OF PAPER, OR FOR DISPENSING A FLUID
DISTRIBUTEUR DE PRODUIT PLAT DE BANDE, EN PARTICULIER EN PAPIER, OU POUR DISTRIBUER UN FLUIDE

(30) Priorität: 10.04.2019 AT 503172019
(43) Veröffentlichungstag der Anmeldung: 14.10.2020
(73) Patentinhaber: Hagleitner, Hans Georg, 5700 Zell am See (AT)
(72) Erfinder: Hagleitner, Hans Georg, 5700 Zell am See (AT)
(74) Vertreter: Torggler & Hofmann Patentanwälte - Innsbruck

(56) Entgegenhaltungen:
- WO-A1-87/00743
- WO-A1-98/53728
- AT-U1- 11 565
- DE-U1- 29 622 548
- US-A- 4 666 099
- US-A1- 2012 274 280
- US-B1- 6 551 739

## Beschreibung

Die Erfindung betrifft einen Spender zur Ausgabe eines bahnförmigen Flächenproduktes, insbesondere aus Papier, oder zur Ausgabe eines Fluids, gemäß dem Oberbegriff des Anspruchs 1. Weiters betrifft die Erfindung eine auswechselbare Stromquelle, insbesondere für einen solchen Spender.

Spender für den Sanitärbereich zur Ausgabe eines bahnförmigen Flächenproduktes insbesondere aus Papier oder zur Ausgabe eines Fluids, beispielsweise einer Seife, sind vor allem im Sanitärbereich bereits bekannt. Bei Spender mit einer elektrisch angetriebenen Ausgabevorrichtung gibt es bereits auch Vorschläge, eine Stromquelle im Inneren des Spenders auswechselbar unterzubringen (beispielsweise US 8,919,233 B2).

Das Dokument WO 87/00743 A1 zeigt einen Spender, bei dem die Batterien in einer waagrechten, zylindrischen Aufnahme in der Nachfüllung, die in den Spender eingesetzt werden kann, untergebracht sind. Die zylindrische Aufnahme ist einseitig für das Einsetzen der Batterien offen und kann samt der gesamten Nachfüllung von oben in den Spender eingesetzt werden.

Das Dokument US 6 551 739 B1 zeigt einen Spender mit einem Aufnahmefach, das einseitig seitlich offen ist und zur Aufnahme einer Batterieeinheit, die mehrere Batterien umfasst, geeignet ist.

Das Dokument WO 98/53728 A1 zeigt einen Spender, bei dem die Batterien entweder in der Achse der Papierrolle oder innerhalb der Förderwalze angeordnet sein können. Diese Bauteile sind jeweils zylindrische ausgeführt und einseitig am Gehäuse befestigt.

Das Dokument DE 296 22 548 U1 zeigt einen einseitig offenen Batterieschacht zum Einsetzen von Batterien. Dieser Batterieschacht kann mit einer Klappe verschlossen werden.

Dokument US 2012/274280 offenbart eine Stromquelle für die Stromversorgung mobiler Geräte, z. B. eines mechanischen Brustkompressionsgeräts.

Aufgabe der Erfindung ist es, einen Spender der eingangs genannten Gattung zu schaffen, bei dem ein Einsetzen oder Auswechseln der Stromquelle leicht möglich ist.

Erfindungsgemäß wird dies durch die Merkmale des Anspruchs 1 erreicht. Durch das beidseitig offene Aufnahmefach ist es möglich, eine Stromquelle von beiden Seiten des Spenders in das Aufnahmefach einzuschieben. Das ist besonders dann von Vorteil, wenn der Spender an der Wand eines Raumes, insbesondere Sanitärraumes, im Bereich einer Decke montiert ist, weil dann der Spender im allgemeinen nur von einer Seite her zugänglich ist, während die andere Seite durch die im Eckbereich anschließende andere Raumwand schwer oder nicht zugänglich ist. Man kann dann einfach die Stromquelle von der besser zugänglichen Seite in den Spender einschieben.

Um einen unberechtigten Zugriff auf die Stromquelle und die Komponenten im Inneren des Spenders, insbesondere die elektrisch angetriebene Ausgabevorrichtung, zu verhindern, ist vorzugsweise vorgesehen, dass an einem Träger ein haubenförmiger Deckel schwenkbar gelagert ist, der im geschlossenen Zustand die Ausgabevorrichtung und das Aufnahmefach auf beiden Seiten abdeckt und im geöffneten Zustand freigibt.

Aus platztechnischen Gründen ist es günstig, wenn das Aufnahmefach bei montiertem Spender im unteren Bereich desselben zwischen Rückwand und einem unteren Teil, vorzugsweise einer Messerwalze, der Ausgabevorrichtung angeordnet ist.

Gemäß der Erfindung können verschiedenartige Stromquellen vorgesehen sein, beispielsweise eine Batterieeinheit mit nicht aufladbaren Batterien oder eine Akkumulatoreinheit, die zumindest einen wiederaufladbaren Akkumulator enthält. Im Rahmen der vorliegenden Erfindung wird unter Stromquelle aber auch ein Netzkabeladapter verstanden, der in das Aufnahmefach einschiebbar ist. Dieser Netzkabeladapter weist im Allgemeinen eine Anschlussbuchse auf, in die ein stromführendes Netzkabel einsteckbar ist. Der Netzkabeladapter stellt dann eine "indirekte" Stromquelle dar, die den über das Netzkabel zugeführten Strom dem Spender zuführt.

Es ist ein bevorzugtes Merkmal der Erfindung, dass in ein und dasselbe Aufnahmefach verschiedenartige Stromquellen, je nach Bedarf, einschiebbar sind, beispielsweise eine Batterieeinheit, eine Akkumulatoreinheit oder ein Netzkabeladapter.

Die Erfindung betrifft auch eine Stromquelle mit den Merkmalen des Anspruchs 10. Beansprucht wird eine Stromquelle, bei der ein Gehäuse mit Außenwänden vorgesehen ist, die im Wesentlichen entlang den Flächen eines gedachten geraden Prismas verlaufen, und wobei vorgesehen ist, dass die Grundfläche des Prismas asymmetrisch ausgebildet ist und damit insbesondere von der Rechteckform und Kreisform abweicht, und wobei Stromquellenkontakte an einer von der Grundfläche verschiedenen Außenwand des Gehäuses angeordnet sind. Durch diese asymmetrische Ausbildung lässt sich auf einfache Weist ein Verpolungsschutz, also ein nicht richtiges Einlegen der Stromquelle in den Spender, erzielen, außerdem kann damit eine Codierung erzielt werden, wenn die Querschnittsform des länglichen Aufnahmefaches und die Querschnittsform der länglichen Stromquelle vorzugsweise einer Batterieeinheit, zumindest abschnittsweise, vorzugsweise großteils korrespondieren, sodass die Außenwände der eingeschobenen Stromquelle an den Innenwänden des Aufnahmefaches anliegen oder entlang diesen verlaufen. Im Sinne einer Schlüssel-Schlossausbildung passt dann nur eine Stromquelle, die zumindest abschnittsweise in der Querschnittsform der Querschnittsform des Aufnahmefachs entspricht, in dieses hinein.

Weitere Vorteile und Einzelheiten der Erfindung sind, insbesondere für bevorzugte Ausführungsformen, in den Unteransprüchen sowie in der nachfolgenden Figurenbeschreibung näher erläutert.
- Fig. 1: zeigt ein Ausführungsbeispiel eines erfindungsgemäßen Spenders in geöffnetem Zustand.
- Fig. 2: zeigt denselben Spender in geschlossenem Zustand.
- Fig. 3: zeigt ein Ausführungsbeispiel des Innenaufbaus eines erfindungsgemäßen Spenders bei vollständig abgenommenem Deckel.
- Fig. 4: zeigt ein Ausführungsbeispiel eines Aufnahmefaches für eine Stromquelle eines erfindungsgemäßen Spenders.
- Fig. 5: zeigt ein Ausführungsbeispiel einer Batterieeinheit in einer perspektivischen Darstellung.
- Fig. 6: zeigt diese Batterieeinheit in einer Explosionsdarstellung.
- Fig. 7: zeigt einen Längsschnitt durch die Batterieeinheit der Figuren 5 und 6.
- Fig. 8: zeigt eine stirnseitige Ansicht auf die Batterieeinheit der Figuren 5 bis 7.
- Fig. 9: zeigt eine Explosionsdarstellung eines Ausführungsbeispiels einer erfindungsgemäßen Akkumulatoreinheit.
- Fig. 10: zeigt diese Akkumulatoreinheit in einer perspektivischen Ansicht.
- Fig. 11: zeigt ein weiteres Ausführungsbeispiel einer größeren Akkumulatoreinheit in einer perspektivischen Ansicht.
- Fig. 12: zeigt ein Ausführungsbeispiel einer Stromquelle, die als Netzkabeladapter ausgebildet ist.
- Fig. 13: zeigt den zusammengebauten Netzkabeladapter in einer perspektivischen Ansicht.
- Fig. 14: zeigt in einer Explosionsdarstellung ein Ausführungsbeispiel eines erfindungsgemäßen Spenders mit einem Set von verschiedenen Stromquellen (Batterieeinheit und Akkumulatoreinheiten).
- Fig. 15a: zeigt ein Ausführungsbeispiel einer erfindungsgemäßen Akkumulatoreinheit in einer Querschnittsdarstellung.
- Fig. 15b: zeigt den unteren Bereich eines Ausführungsbeispiels eines erfindungsgemäßen Spenders, bei dem eine Akkumulatoreinheit gemäß Fig. 15a in das Aufnahmefach eingesetzt ist.
- Fig. 16a: zeigt ein Ausführungsbeispiel einer erfindungsgemäßen Batterieeinheit in einer Querschnittsdarstellung.
- Fig. 16b: zeigt den unteren Bereich eines Spenders, bei dem eine Batterieeinheit gemäß Fig. 16a in das Aufnahmefach des Spenders eingesetzt ist.

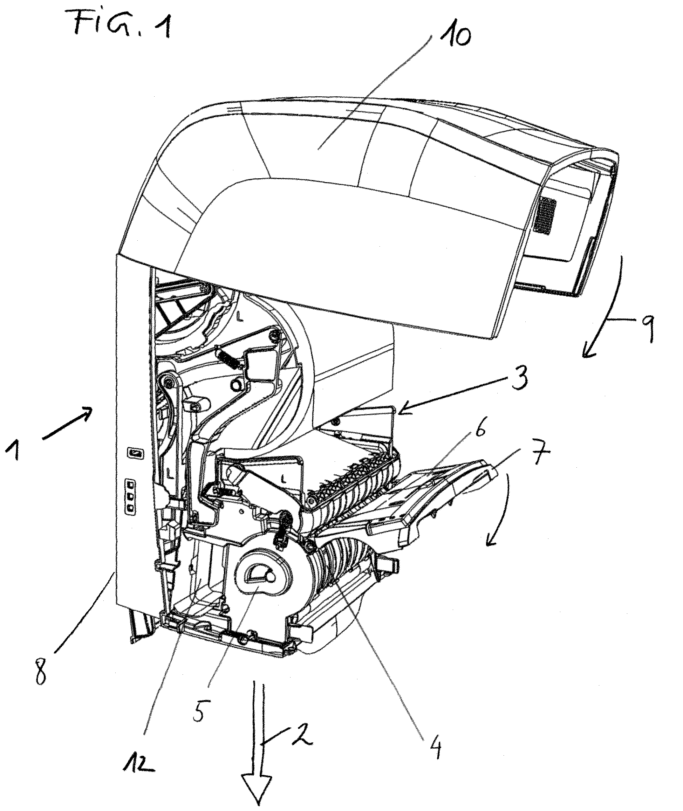

Der in Figur 1 dargestellt Spender dient zur Ausgabe eines bahnförmigen Flächenproduktes, insbesondere Papier (beispielsweise Toilettenpapier oder Handtüchern aus Papier) in Richtung des Pfeiles 2 von der Unterseite des Spenders aus. Dazu ist im Inneren des Spenders eine elektrisch angetriebene Ausgabevorrichtung 3 vorgesehen, die insbesondere eine Messerwalze 4 umfasst, die von einem Elektromotor angetrieben ist und aus der zur Anbringung einer Perforierung im vorbeigezogenen Flächenprodukt ein Messer radial austritt. Eine Kulissensteuerung 5 steuert dabei die Messerlage in an sich bekannter Weise. Im oberen Bereich des Spenders ist eine, in Figur 1 nicht näher ersichtliche, Vorratsrolle des bahnförmigen Flächenproduktes vorgesehen, die über Umlenkwalzen und die Messerwalze letztlich nach unten in Pfeilrichtung 2 austritt. Die elektronische Steuervorrichtung 6 für die elektrisch angetriebenen Komponenten, insbesondere die Messerwalze 4, ist auf einem klappbaren Abdeckteil 7 im Inneren des Spenders angeordnet. Der Spender ist mit seiner Rückwand 8 an einer Wand befestigt, die im Wesentlichen vertikal ausgerichtet ist.

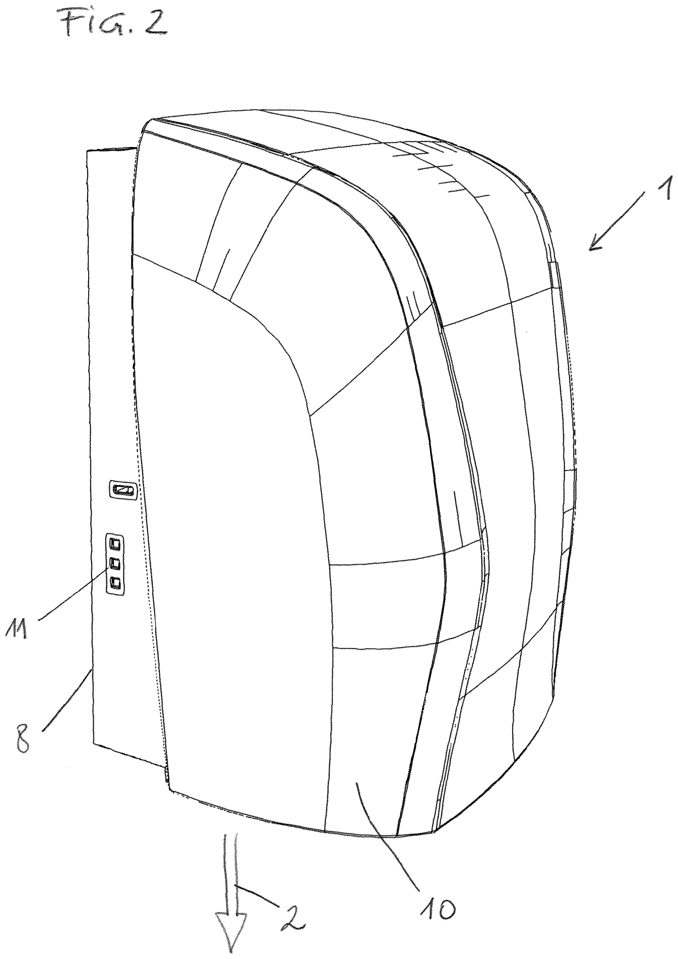

Der Spender weist weiters einen in Richtung des Pfeiles 9 schwenkbar gelagerten Deckel 10 auf, der in der normalen Betriebsstellung geschlossen ist, wie es die Figur 2 zeigt. Über einen codierten Schlüssel, der in ein Schloss 11 einführbar ist, kann der in der geschlossenen Stellung arretierte Deckel 10 entarretiert werden und anschließend in die in Figur 1 gezeigte Stellung geöffnet werden. Das ist im Allgemeinen dem Servicepersonal oder den Vertretern des Herstellers vorbehalten.

Der normale Benutzer löst die Ausgabe eines Bahnabschnittes des bahnförmigen Flächenproduktes dadurch aus, dass er über einen nicht dargestellten, vorzugsweise berührungslosen, Schalter die Ausgabe hervorruft.

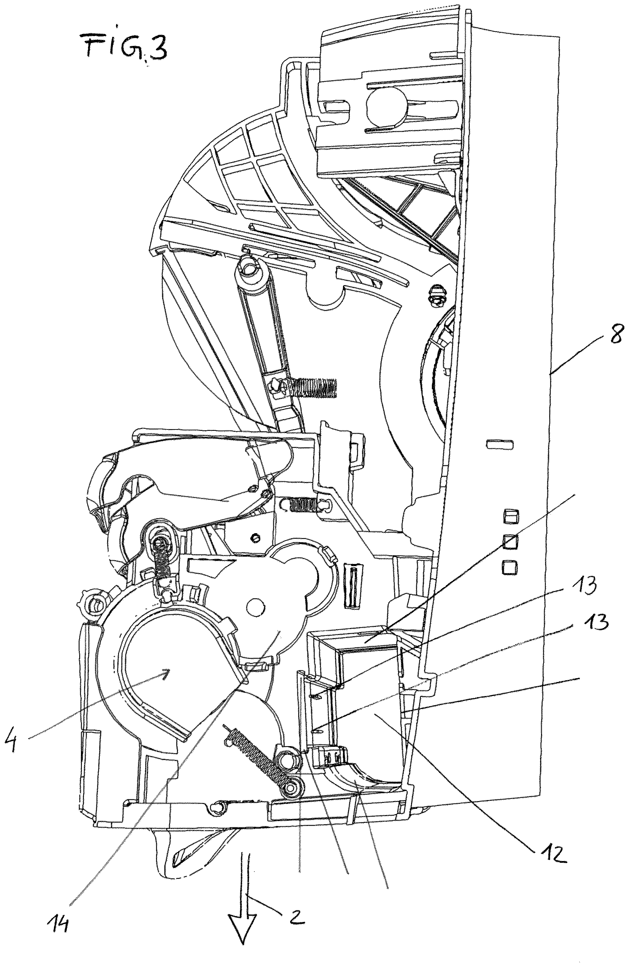

Die Figur 1 zeigt im unteren Bereich, zwischen der Rückwand 6 und der Messerwalze 4, platzgünstig untergebracht, ein Aufnahmefach 12 für eine Stromquelle, insbesondere eine Batterieeinheit oder eine Akkumulatoreinheit. Dieses Aufnahmefach ist, wie unter anderem aus Figur 3 ersichtlich ist, beidseitig offen, geht also quer durch den Spender durch. Es wird lediglich bei geschlossenem Deckel 10 seitlich abgedeckt und gegen unberechtigten Zugriff von außen geschützt.

An einer Innenwand des Aufnahmefaches 12 sind zwei starre elektrische Wandkontakte 13 angeordnet, über die Stromquellenkontakte, bei in das Aufnahmefach 12 eingeschobener Stromquelle, kontaktierbar sind.

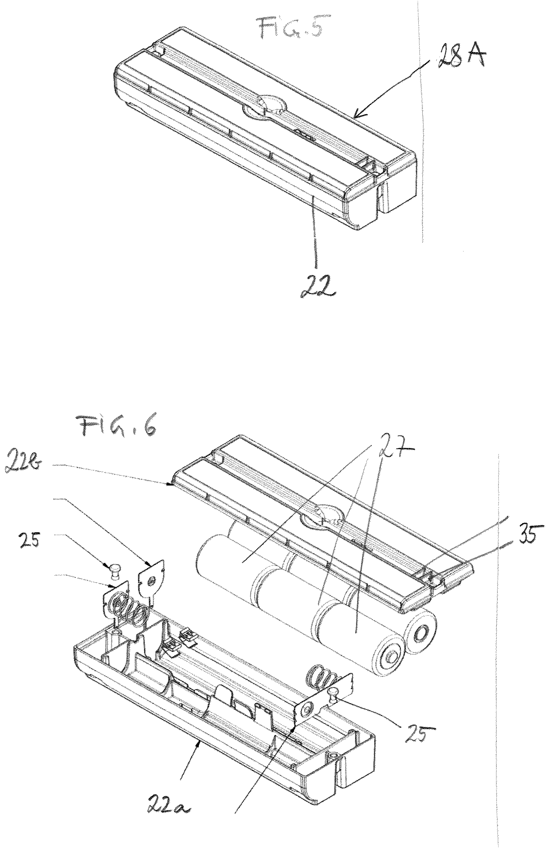

Verschiedenartige Stromquellen, die zum Einschieben in das Aufnahmefach geeignet sind, werden anhand der Figuren 5 bis 14 sowie 15a und 16a im Folgenden noch näher erläutert.

In Figur 3 ist noch mit dem Bezugszeichen 4 die Lage der Messerwalze eingezeichnet und mit Bezugszeichen 14 die elektrische Antriebseinheit.

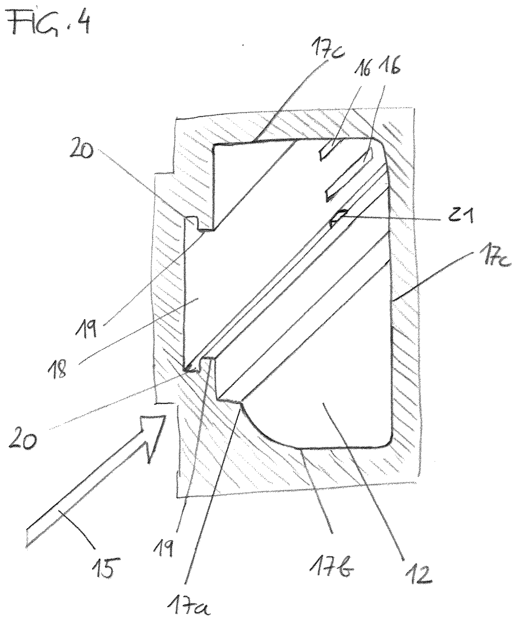

In den Figuren 3 und 4 sieht man die Ausgestaltung eines Ausführungsbeispiels eines erfindungsgemäßen Aufnahmefaches 12, in welches eine Stromquelle in Richtung des Pfeiles 15 aber auch von der anderen Seite in die entgegengesetzte Richtung einsetzbar ist. Die Geometrie des Querschnitts des Aufnahmefaches 12 ist asymmetrisch gewählt, um Verpolungsschutz zu erzielen und immer ein richtiges Einlegen der Stromquelle zu gewährleisten, derart, dass die später beschriebenen Stromquellenkontakte mit den elektrischen Wandkontakten 16 des Spenders in Kontakt treten, wenn die Stromquelle vollständig in das Aufnahmefach 12 eingeschoben ist.

Im Einzelnen weist das Aufnahmefach 12 eine im Wesentlichen prismatische Form auf, bei der sich die Innenwände im Wesentlichen entlang der Flächen eines gedachten geraden Prismas erstrecken, wobei der Begriff Prisma weit zu sehen ist und nicht auf polygonale Grundflächen beschränkt ist. Wie man sieht, weist die Grundfläche des Prismas eine asymmetrische und insbesondere von der Rechteck- und Kreisform abweichende Form auf, die sowohl konkave als auch konvex gekrümmte Bereiche aufweist. Der konkave Randabschnitt ist mit 17a bezeichnet, der konvexe Randabschnitt mit 17b, dazwischen liegen gerade Randabschnitte 17c.

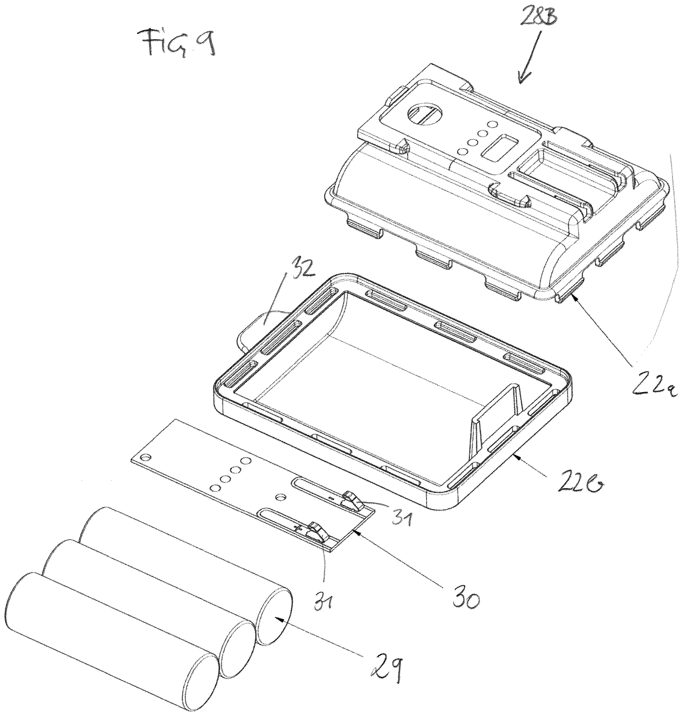

Das in Figur 3 und 4 dargestellte Ausführungsbeispiel zeigt ein Aufnahmefach, das eine weitere Besonderheit aufweist, nämlich eine T-förmig hinterschnittene Nut 18 in einer seitlichen Innenwand des Aufnahmefaches 12. Eintrittsseitig ist die Nut 18 durch Stege 19 begrenzt, die die engste lichte Weite der Nut definieren. Dahinter liegen erweiterte Bereiche 20, sodass sich insgesamt eine T-förmig hinterschnittene Nut ergibt. Im erweiterten Bereich 20 kann ein Anschlag 21 vorgesehen sein, der zur tiefen Positionierung einer eingeschobenen Stromquelle dient, die derart profiliert ist, dass sie auch im erweiterten Bereich 20 der T-förmigen Nut eingeschoben wird. Eine solche Stromquelle ist beispielsweise die Akkumulatoreinheit gemäß den Figuren 9 und 10 oder 15a. Diese Akkumulatoreinheit kann in das Aufnahmefach 12 nur einseitig eingeschoben werden, bis sie am Anschlag 21 anliegt, dann liegen ihre Kontakte genau an den Wandkontakten 16 an.

Der Anschlag 21 kann übrigens auch dadurch realisiert sein, dass der erweiterte Bereich 20 nicht durch das Aufnahmefach durchgeht, sondern im Bereich der Stelle des Anschlags 21 einfach endet. Dann ist das Ende des erweiterten Bereiches 20 selbst der Anschlag.

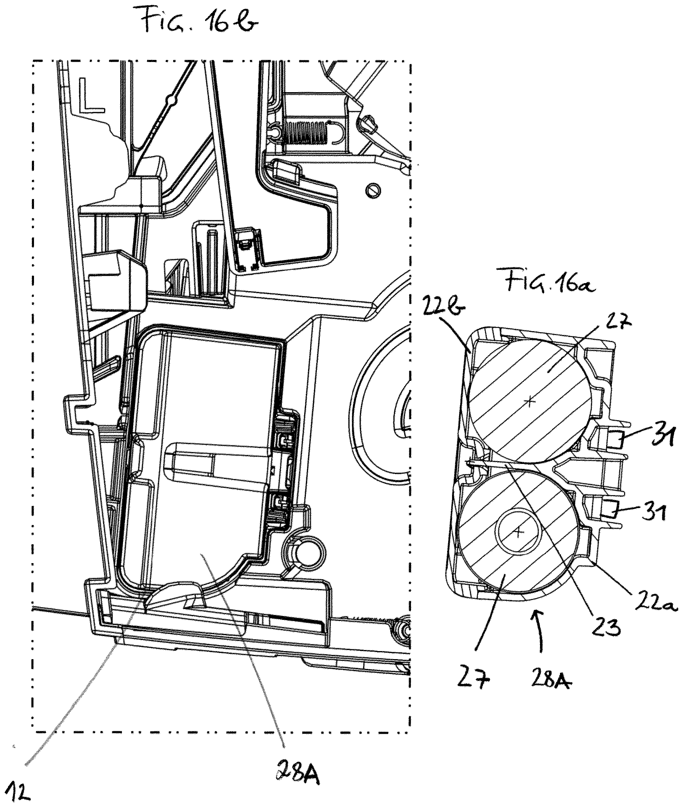

Anders ist die Situation wenn ein anderer Typ einer Stromquelle, beispielsweise eine Batterieeinheit gemäß den Figuren 5 bis 8, in das Aufnahmefach 12 eingeschoben wird, wie dies beispielsweise in den Figuren 16a und 16b gezeigt ist. Diese Stromquelle (Batterieeinheit) weist nämlich keine Gehäuseteile auf, die in den erweiterten Bereich 20 der Nut eintreten. Damit läuft diese Stromquelle auch nicht auf den Anschlag 21 auf und kann daher tatsächlich von beiden Seiten in das Aufnahmefach eingeschoben werden.

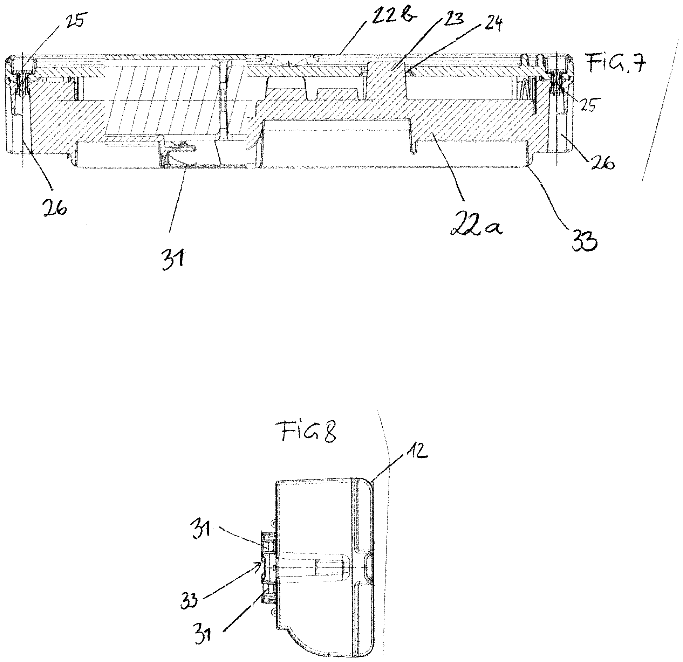

Das in den Figuren 5 bis 8 dargestellte Ausführungsbeispiel einer erfindungsgemäßen Stromquelle stellt eine Batterieeinheit dar, die - wie bereits erwähnt - von beiden Seiten in das beidseitig offene Aufnahmefach 12 eingeschoben werden kann. Insbesondere die Figur 8 zeigt, dass die Querschnittsform dieser Stromquelle 12 im Wesentlichen der Querschnittsform des Aufnahmefaches entspricht.

Die in den Figuren 5 bis 8 dargestellte Batterieeinheit weist ein aus Kunststoff bestehendes Gehäuse 22 mit einem Unterteil 22a und einem Deckel 22b auf. Diese beide Teile 22a und 22b können über Rastelemente miteinander verrastet werden. Einerseits weist dazu der Unterteil 22a einen nach oben weisenden Vorsprung 23 auf, der an seinem Ende ein Rastelement trägt, welches in die Öffnung 24 im Deckel 22b einrasten kann.

Darüber hinaus gibt es noch Rastnieten 25, die den Deckelteil 22b mit dem Unterteil 22a verbinden. Diese Rastnieten 25 sind nur schwer lösbar und lediglich mittels eines Spezialwerkzeugs durch die Öffnung 26 von unten entfernbar. Damit sind die im Inneren angeordneten Batterien 27 nur für berechtigte Personen zugänglich. Es kann damit sichergestellt werden, dass nur hochwertige Batterien eingesetzt werden und nicht einzelne Batterien, sondern immer der ganze Batteriesatz getauscht wird. Die Stromquellenkontakte 27 sind als Federzungen ausgebildet. Sie sind in ihrer Lage so angeordnet, dass bei in das Aufnahmefach 12 eingeschobener Stromquelle genau die elektrischen Wandkontakte 16 (Figur 4) kontaktiert werden. Damit ist es möglich, die in den Batterien 27 gespeicherte Energie den elektrischen Komponenten im Spender zuzuführen.

Bei dem in Figur 9 dargestellten Ausführungsbeispiel handelt es sich um einen anderen Typ einer Stromquelle 28, nämlich um eine Akkumulatoreinheit 28B, diese weist ebenfalls einen Unterteil 22a sowie einen Deckelteil 22b auf. Im Inneren befinden sich anstelle der Batterien 27 Akkumulatorzellen 29. Auf einer Platine 30 sind Federzungen 31 vorgesehen, die ebenfalls so positioniert sind, dass sie mit den Wandkontakten 16 im Aufnahmefach 12 in Kontakt treten können.

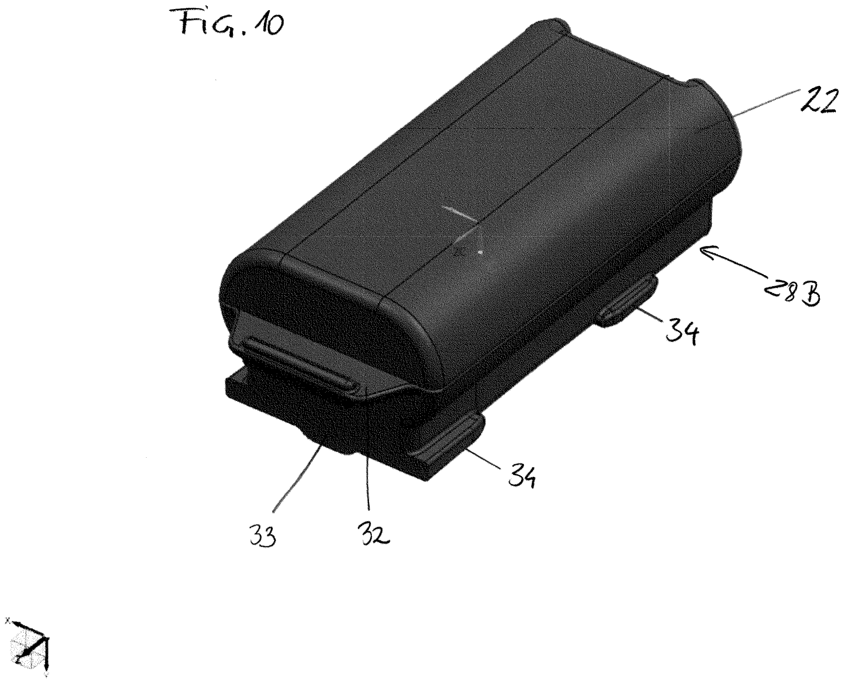

Die Figur 10 zeigt die zusammengebaute Akkumulatoreinheit 28B gemäß der Figur 9. Am Gehäuse 22 ist ein Griff 32 vorgesehen, um die Akkumulatoreinheit wieder aus dem Aufnahmefach bedarfsweise entnehmen zu können. Die Akkumulatoreinheit gemäß Figur 10 ist in ihrer Länge kürzer als das Aufnahmefach. Deshalb ist der Griff 32 zur Entnahme günstig. Bei der Batterieeinheit gemäß den Figuren 5 bis 8 war die Länge der Batterieeinheit im Wesentlichen gleich wie die Länge des Aufnahmefaches. Hier kann die Entnahme einfach dadurch erfolgen, dass auf eine der beiden Seiten per Hand auf die Batterieeinheit gedrückt wird und sie damit ein stückweit aus dem Aufnahmefach 12 herausgeschoben wird, sodass sie dann ergreifbar und ganz herausziehbar ist.

Die Figur 10 zeigt weiters, dass die Akkumulatoreinheit 28B (Stromquelle) einen Vorsprung 33 aufweist, der aber im Gegensatz zum Vorsprung 33 der Batterieeinheit gemäß den Figuren 5 bis 8 seitlich abstehende Laschen 34 aufweist. Diese seitlich abstehenden Laschen 34 gelangen bei eingeschobener Akkumulatoreinheit in den erweiterten Bereich 20 der T-förmig hinterschnittenen Nut (siehe beispielsweise Figur 4) und laufen dann dort auf den Anschlag 21 als Tiefenbegrenzung auf.

Bei der Batterieeinheit 28A gemäß den Figuren 5 bis 8 fehlen diese seitlich abstehenden Laschen 34, weshalb auch diese Batterieeinheit quer, ohne Tiefenbegrenzung durch das Aufnahmefach 12 geschoben werden kann. Um dort dennoch eine Lagepositionierung zu haben, kann vorgesehen sein, dass beispielsweise der Deckelteil 22b zwei Stege 35 aufweist, die mit einem federnden (beispielsweise angespritzten Kunststoffteil) im Aufnahmefach in Kontakt treten können. Dieser federnde Kunststoffteil (nicht dargestellt) ist überfahrbar und bildet keinen tatsächlichen Anschlag. Er gibt aber dem Benutzer eine überfahrbare Rastposition vor, die er spürt, sodass die Batterieeinheit lagerichtig (also in der richtigen Tiefenposition) im Aufnahmefach 12 angeordnet werden kann, sodass die elektrischen Kontakte richtig stehen.

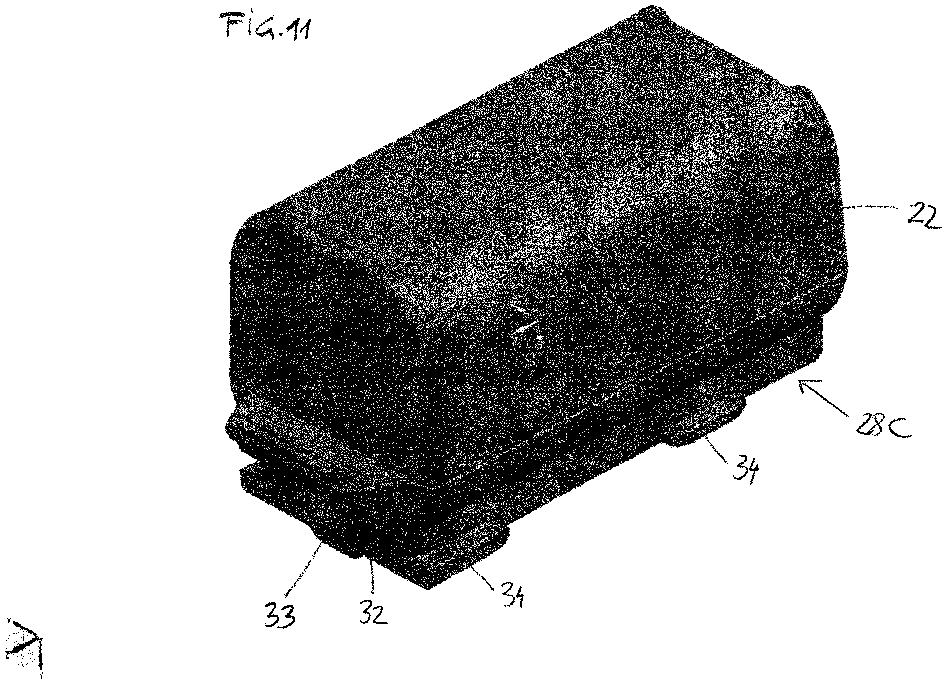

Das in Figur 11 dargestellte Ausführungsbeispiel entspricht im Wesentlichen dem der Figur 10. Es handelt sich ebenfalls um eine Akkumulatoreinheit 28C, allerdings mit sechs statt drei Akkumulatorzellen.

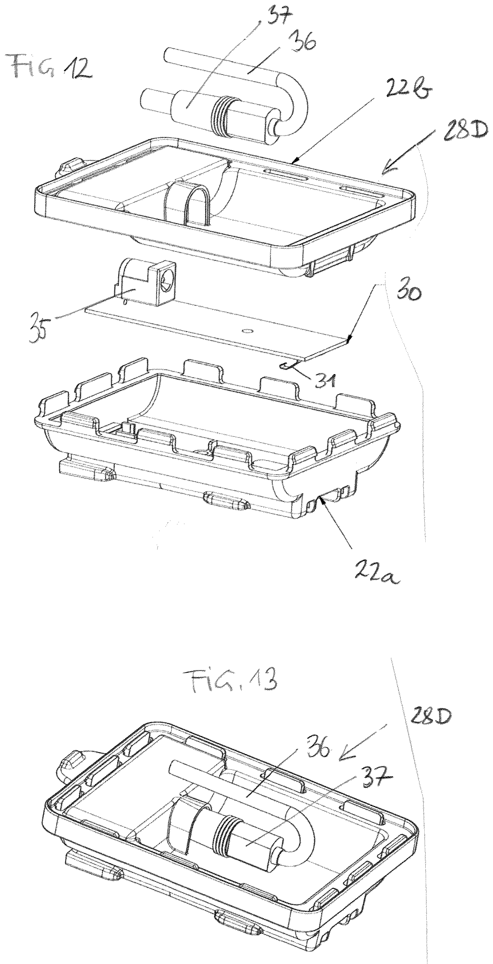

Bei dem in Figur 12 und 13 dargestellten Ausführungsbeispiel der erfindungsgemäßen Stromquelle handelt es sich um einen Netzkabeladapter 28D mit einem zweiteiligen Gehäuse aus Unterteil 22a und Deckelteil 22b, dazwischen befindet sich eine Platine 30 mit Federzungen 31. Eine Anschlussbuchse 35 dient zum Anschluss eines Netzkabels 36 mit Stecker 37. Das Netzkabel 36 kommt von einem nicht dargestellten Netzteil, das entweder im Spender selbst oder außerhalb angeordnet sein kann. Der Netzkabeladapter 28D gemäß den Figuren 12 bis 13 stellt sicher, dass der im Netzkabel 36 geführte Strom über die Federzungen 31 und die Wandkontakte 16 den elektrischen Komponenten im Spender zugeführt werden kann.

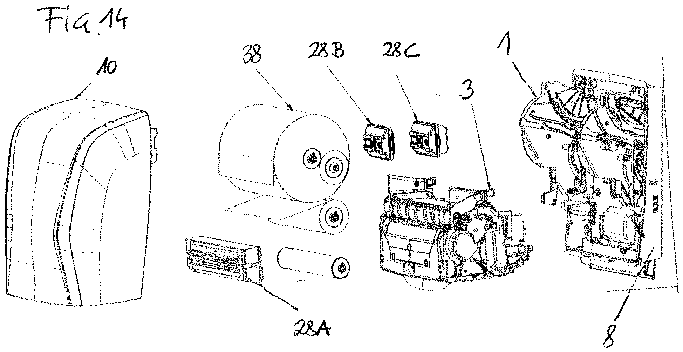

In Figur 14 ist eine Explosionsdarstellung des Ausführungsbeispiels eines erfindungsgemäßen Spenders dargestellt, wobei die Komponenten mit den bisher verwendeten Bezugszeichen bezeichnet sind. Man sieht, dass die gesamte elektrisch angetriebene Ausgabevorrichtung 3 von der Rückwand 8 des Spenders lösbar ist und beispielsweise für Wartungszwecke austauschbar ist.

Das bahnförmige Flächenprodukt, insbesondere Papier, ist zu einer Rolle 38 aufgewickelt und wird durch die elektrisch angetriebene Ausgabevorrichtung abschnittsweise nach unten ausgegeben.

In Figur 14 sieht man, dass drei verschiedenartige Typen von Stromquellen zum Einsatz kommen können, nämlich eine längliche, beidseitig einschiebbare Batterieeinheit 28A, eine kleine, einseitig bis zu einem Tiefenanschlag einschiebbare Akkumulatoreinheit 28B oder eine größere Akkumulatoreinheit 28C.

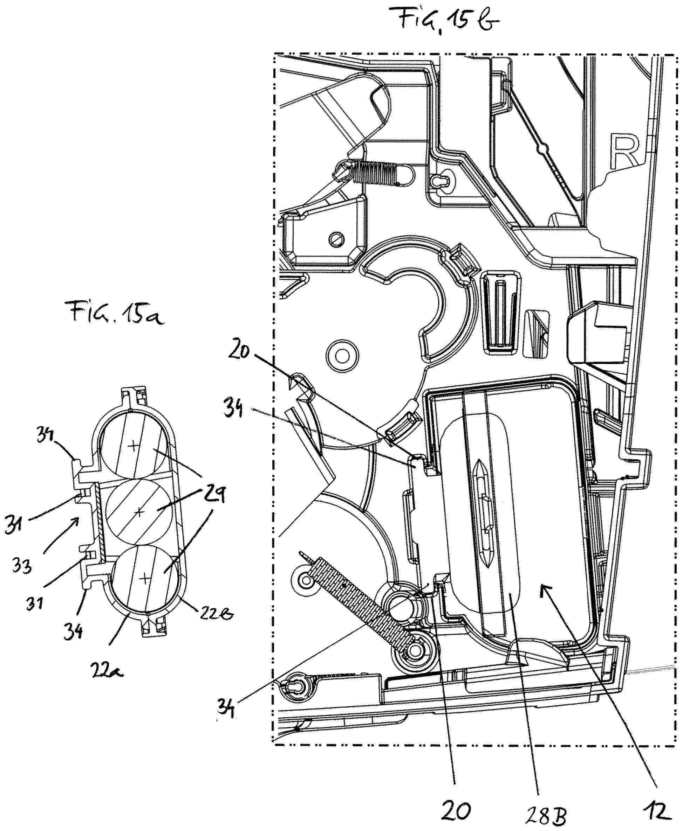

In Figur 15a ist ein Schnitt durch die Akkumulatoreinheit gemäß den Figuren 9 und 10 gezeigt. Es ist der Unterteil 22a des Gehäuses sowie der damit verrastete Deckelteil 22b des Gehäuses samt den darin befindlichen Akkumulatorzellen 29 ersichtlich.

Die Federzungen 31 befinden sich geschützt zwischen zwei seitlichen Stegen des Vorsprungs 33, der seitlich abstehende Laschen 34 aufweist. Diese seitlich abstehenden Laschen 34 passen genau in die erweiterten Bereiche 20 der T-förmig hinterschnittenen Nut des Aufnahmefaches 12, wie dies die Figur 15b zeigt. Es ist ersichtlich, wie die verhältnismäßig kleine Akkumulatoreinheit im Wesentlichen in der T-förmigen Nut, insbesondere in den erweiterten Bereichen 20, hängt und nicht das gesamte Volumen der Aufnahmeeinheit 12 ausfüllt.

Anders ist die Situation bei einer Batterieeinheit gemäß den Figuren 5 bis 8, die im Querschnitt auch in Figur 16a dargestellt ist. Diese Batterieeinheit 28A ist in ihrer Querschnittsform im Wesentlichen der Querschnittsform des Aufnahmefaches 12 angeglichen und füllt dieses sowohl im Querschnitt als auch in der Länge im Wesentlichen vollständig aus. Der Vorsprung 33 weist im Gegensatz zu der Figur 15a gemäß Figur 16a keine seitlichen Laschen 34 auf, sodass die Batterieeinheit 28A von beiden Seiten in das Aufnahmefach 12 und quer durch dieses durchgeschoben werden kann.

In Figur 16b, die den Spender von der anderen Seite als die Figur 15b zeigt, sieht man übrigens die erweiterten Bereiche 20 der T-förmig hinterschnittenen Nut nicht, da dieser erweiterte Bereich 20 im Wesentlichen an der Stelle des Anschlags 21 gemäß der Figur 4 und der in Figur 15b gezeigten Seite her endet. Weiter zur Seite des Spenders hin, die in Figur 16b gezeigt ist, ist die Nut daher nicht mehr hinterschnitten.

Die Erfindung ist selbstverständlich nicht auf die dargestellten Ausführungsbeispiele beschränkt. Beispielsweise kann die Erfindung auch bei einem Spender zur Ausgabe eines Fluids, insbesondere einer Flüssigseife, zum Einsatz kommen. Es ist auch möglich, dass die Lage des Batteriefaches im Spender an einer anderen Stelle vorgesehen ist. Auch eine andere Ausrichtung, beispielweise in senkrechter Richtung im Gegensatz zur horizontalen Richtung, ist durchaus denkbar und möglich.

### Bezugszeichenliste:

- 1: Spender
- 2: Pfeil, Ausgaberichtung des bahnförmigen Flächenproduktes
- 3: elektrisch angetriebene Ausgabevorrichtung
- 4: Messerwalze
- 5: Kulissenbahn
- 6: elektronische Steuervorrichtung
- 7: schwenkbare Klappe
- 8: Rückwand, Träger
- 9: Pfeil
- 10: Deckel
- 11: Schloss
- 12: Aufnahmefach
- 13: Wandkontakte
- 14: elektrischer Motorantrieb
- 15: Einschubrichtung
- 16: Wandkontakte
- 17a: konkaver Randbereich
- 17b: konvexer Randbereich
- 17c: gerader Randbereich
- 18: Nut
- 19: Steg
- 20: erweiterter Bereich der Nut 18
- 21: Anschlag
- 22: Gehäuse
- 22a: Unterteil
- 22b: Deckelteil
- 23: Vorsprung
- 24: Öffnung
- 25: Rastniete
- 26: Öffnung
- 27: Batterien
- 28: Stromquelle
- 28A: Batterieeinheit
- 28B: Akkumulatoreinheit klein
- 28C: Akkumulatoreinheit groß
- 28D: Netzkabeladapter
- 29: Akkumulatorzellen
- 30: Platine
- 31: Federzungen, Stromquellenkontakte
- 32: Griff
- 33: Vorsprung
- 34: Laschen
- 35: Anschlussbuchse
- 36: Netzteilkabel
- 37: Netzteilstecker
- 38: bahnförmiges Flächenprodukt

## Patentansprüche

1. Spender (1) zur Ausgabe eines bahnförmigen Flächenprodukts (38), insbesondere aus Papier, oder zur Ausgabe eines Fluids, mit einem Gehäuse, in dem eine elektrisch angetriebene Ausgabevorrichtung (3) und eine Stromquelle (28), insbesondere eine Batterieeinheit (28A), eine Akkumulatoreinheit (28B, C) oder ein Netzkabeladapter (28D), angeordnet sind, **dadurch gekennzeichnet, dass** ein beidseitig offenes Aufnahmefach (12) - vorzugsweise in Form einer länglichen, bei montiertem Spender horizontal verlaufenden Durchgangsöffnung - vorgesehen ist, in das die Stromquelle (28) wahlweise von der einen oder anderen Seite einschiebbar ist.

2. Spender nach Anspruch 1, **dadurch gekennzeichnet, dass** das Gehäuse eine Rückwand (8) aufweist, wobei an der Rückwand (8) ein haubenförmiger Deckel (10) schwenkbar gelagert ist, der im geschlossenen Zustand die Ausgabevorrichtung (3) und das Aufnahmefach (12) auf beiden Seiten abdeckt und im geöffneten Zustand freigibt.

3. Spender nach Anspruch 1 oder 2, **dadurch gekennzeichnet, dass** das Aufnahmefach (12) bei montiertem Spender (1) im unteren Bereich desselben zwischen Rückwand (8) und einem unteren Teil, vorzugsweise einer Messerwalze (4), der Ausgabevorrichtung (3) angeordnet ist.

4. Spender nach einem der vorhergehenden Ansprüche, **dadurch gekennzeichnet, dass** in einer - ansonsten bei montiertem Spender (1) vorzugsweise im Wesentlichen vertikal verlaufenden - Innenwand des Aufnahmefachs (12) eine - vorzugsweise T-förmige - hinterschnittene Nut (18) angeordnet ist, in die mindestens ein Vorsprung (33) einer Stromquelle (12) einschiebbar ist, wobei vorzugsweise vorgesehen ist, dass in einem gegenüber der engsten lichten Weite erweiterten Bereich der hinterschnittenen Nut (18) ein Anschlag (21) zu Tiefenpositionierung einer in das Aufnahmefach (12) eingeschobenen Stromquelle (28), vorzugsweise eine Akkumulatoreinheit (28B, 28C) oder ein Netzkabeladapter (28D), angeordnet ist.

5. Spender nach einem der vorhergehenden Ansprüche, **dadurch gekennzeichnet, dass** das Aufnahmefach (12) Innenwände aufweist, die im Wesentlichen entlang der Flächen eines gedachten geraden Prismas verlaufen.

6. Spender nach Anspruch 5, **dadurch gekennzeichnet, dass** die Grundfläche des Prismas asymmetrisch ausgebildet ist und damit insbesondere von der Rechteckform und Kreisform abweicht.

7. Spender nach Anspruch 5 oder 6, **dadurch gekennzeichnet, dass** die Grundfläche des Prismas einen Rand aufweist, der gerade (17c) und gekrümmte Randabschnitte aufweist, wobei vorzugsweise vorgesehen ist, dass die Grundfläche des Prismas einen Rand aufweist, der konvexe (17b) und konkave (17a) Randabschnitte aufweist.

8. Spender nach einem der vorhergehenden Ansprüche, **dadurch gekennzeichnet, dass** in oder an wenigstens einer Innenwand des Aufnahmefaches (12), zumindest zwei - vorzugsweise starre - elektrische Wandkontakte (16) angeordnet sind, über die Stromquellenkontakte (31) bei in das Aufnahmefach eingeschobener Stromquelle (28) kontaktierbar sind.

9. Spender nach einem der vorhergehenden Ansprüche, **dadurch gekennzeichnet, dass** die Querschnittsform des länglichen Aufnahmefaches (12) und die Querschnittsform der länglichen Stromquelle (28) vorzugsweise einer Batterieeinheit (28A), zumindest abschnittsweise, vorzugsweise großteils korrespondieren, sodass die Außenwände der eingeschobenen Stromquelle (28) an den Innenwänden des Aufnahmefaches (12) anliegen oder entlang diesen verlaufen.

10. Stromquelle für einen Spender nach einem der Ansprüche 1 bis 9, wobei die Stromquelle ein Gehäuse (22) mit Außenwänden aufweist, die im Wesentlichen entlang den Flächen eines gedachten geraden Prismas verlaufen, wobei die Grundfläche des Prismas asymmetrisch ausgebildet ist und damit insbesondere von der Rechteckform und Kreisform abweicht, **dadurch gekennzeichnet, dass** Stromquellenkontakte (31) an einer von der Grundfläche verschiedenen Außenwand des Gehäuses (22) angeordnet sind.

11. Stromquelle nach Anspruch 10, **dadurch gekennzeichnet, dass** die Grundfläche des Prismas einen Rand aufweist, der gerade und gekrümmte Randabschnitte aufweist, wobei vorzugsweise vorgesehen ist, dass die Grundfläche des Prismas einen Rand aufweist, der konvexe und konkave Randabschnitte aufweist.

12. Stromquelle nach einem der Ansprüche 10 oder 11, **dadurch gekennzeichnet, dass** sie einen länglichen Vorsprung (33) aufweist, der in einer Nut (18) in einer Innenwand des Aufnahmefaches des Spenders einschiebbar ist.

13. Stromquelle nach einem der Ansprüche 10 bis 12, **gekennzeichnet durch** ein vorzugsweise aus Kunststoff bestehendes Gehäuse (22), in dem mindestens eine Batterie, ein Akkumulator oder eine Anschlussbuchse für ein Netzkabel angeordnet ist, wobei vorzugsweise vorgesehen ist, dass das Gehäuse (22) einen Unterteil (22a) und einen Deckelteil (22b) aufweist, die miteinander durch Rastelemente (23, 24, 25) verrastbar sind, vorzugsweise derart, dass die Rastelemente (23, 24, 25) nicht zerstörungsfrei oder nur mittels eines Werkzeuges lösbar sind.

14. Set bestehend aus mindestens zwei unterschiedlichen Stromquellen nach einem der Ansprüche 10 bis 13, für einen Spender nach einem der Ansprüche 1 bis 9, wobei sich die unterschiedlichen Stromquellen (28A-D) in ihrer äußeren Form und/oder dem Typ der Stromquelle - ausgewählt aus den Typen Batterieeinheit, Akkumulatoreinheit, Netzkabeladapter - unterscheiden.

15. Set nach Anspruch 14, **dadurch gekennzeichnet, dass** Stromquellenkontakte (31) bei allen Stromquellen (28A-D) des Sets derart gleich an einem Gehäuse (22) anzuordnen sind, dass sie dieselben Spenderkontakte im Aufnahmefach kontaktieren.

16. Spender nach einem der Ansprüche 1 bis 9 mit einer Stromquelle nach einem der Ansprüche 10 bis 13.

## Claims

1. A dispenser (1) for dispensing a sheet-like flat product (38), in particular of paper, or for dispensing a fluid, having a housing in which an electrically driven dispensing device (3) and a power source (28), in particular a battery unit (28A), an accumulator unit (28B, C) or a mains cable adapter (28D), are arranged, **characterized in that** a receiving compartment (12) which is open on both sides - preferably in the form of an elongate through-opening which extends horizontally when the dispenser is mounted - is provided into which the power source (28) can be selectively inserted from one side or the other.

2. The dispenser according to claim 1, **characterized in that** the housing has a rear wall (8), wherein a hood-shaped cover (10) is pivotably mounted to the rear wall (8), which cover covers the dispensing device (3) and the receiving compartment (12) on both sides in the closed state and exposes them in the open state.

3. The dispenser according to claim 1 or 2, **characterized in that** the receiving compartment (12) is arranged in the lower region of the dispenser (1) between the rear wall (8) and a lower part, preferably a knife roller (4), of the dispensing device (3) when the dispenser is mounted.

4. The dispenser according to any one of the preceding claims, **characterized in that** an undercut groove (18) - preferably T-shaped - is arranged in an inner wall of the receiving compartment (12) - which otherwise preferably runs substantially vertically when the dispenser (1) is mounted - into which at least one projection (33) of a power source (12) can be inserted, wherein it is preferably intended that a stop (21) for depth positioning of a power source (28), preferably an accumulator unit (28B, 28C) or a mains cable adapter (28D), inserted into the receiving compartment (12) is arranged in a region of the undercut groove (18) which is extended compared to the narrowest clear width.

5. The dispenser according to any one of the preceding claims, **characterized in that** the receiving compartment (12) has inner walls which substantially extend along the surfaces of an imaginary straight prism.

6. The dispenser according to claim 5, **characterized in that** the base surface of the prism is asymmetrical and thus deviates in particular from the rectangular shape and circular shape.

7. The dispenser according to claim 5 or 6, **characterized in that** the base surface of the prism has an edge which has straight (17c) and curved edge portions, wherein it is preferably intended that the base surface of the prism has an edge which has convex (17b) and concave (17a) edge portions.

8. The dispenser according to any one of the preceding claims, **characterized in that** at least two - preferably rigid - electrical wall contacts (16) are arranged in or on at least one inner wall of the receiving compartment (12), via which power source contacts (31) can be contacted when the power source (28) is inserted into the receiving compartment.

9. The dispenser according to any one of the preceding claims, **characterized in that** the cross-sectional shape of the elongate receiving compartment (12) and the cross-sectional shape of the elongate power source (28), preferably of a battery unit (28A), correspond at least in sections, preferably to a large extent, such that the outer walls of the inserted power source (28) rest against the inner walls of the receiving compartment (12) or extend along them.

10. A power source for a dispenser according to any one of claims 1 to 9, wherein the power source has a housing (22) with outer walls which extend substantially along the surfaces of an imaginary straight prism, wherein the base surface of the prism is formed asymmetrically and thus deviates in particular from the rectangular shape and circular shape, **characterized in that** power source contacts (31) are arranged on an outer wall of the housing (22) which is different from the base surface.

11. The power source according to claim 10, **characterized in that** the base surface of the prism has an edge which has straight and curved edge sections, wherein it is preferably intended that the base surface of the prism has an edge which has convex and concave edge sections.

12. The power source according to any one of claims 10 or 11, **characterized in that** it has an elongated projection (33) which can be inserted into a groove (18) in an inner wall of the receiving compartment of the dispenser.

13. The power source according to any one of claims 10 to 12, **characterized by** a housing (22), preferably made of plastic, in which at least one battery, one accumulator or one connection socket for a mains cable is arranged, wherein it is preferably intended that the housing (22) has a lower part (22a) and a lid part (22b) which can be latched together by latching elements (23, 24, 25), preferably in such a way that the latching elements (23, 24, 25) cannot be released non-destructively or can only be released by means of a tool.

14. A set consisting of at least two different power sources according to any one of claims 10 to 13, for a dispenser according to any one of claims 1 to 9, wherein the various power sources (28A-D) differ in their external shape and/or the type of power source - selected from the types battery unit, accumulator unit, mains cable adapter.

15. The set according to claim 14, **characterized in that** power source contacts (31) of all power sources (28A-D) of the set are to be arranged identically on a housing (22) in such a way that they contact the same dispenser contacts in the receiving compartment.

16. The dispenser according to any one of claims 1 to 9, comprising a power source according to any one of claims 10 to 13.

## Revendications

1. Distributeur (1) destiné à distribuer un produit plat en forme de bande (38), en particulier en papier, ou destiné à distribuer un fluide, avec un boîtier, dans lequel sont disposés un dispositif de distribution (3) entraîné de manière électrique et une source de courant (28), en particulier une unité de batterie (28A), une unité d'accumulateur (28B, C) ou un adaptateur de câble d'alimentation secteur (28D), **caractérisé en ce qu'**un compartiment de réception (12) ouvert des deux côtés est prévu - de préférence sous la forme d'une ouverture de passage allongée s'étendant de manière horizontale lorsque le distributeur est monté - dans lequel la source de courant (28) peut être emboîtée au choix par l'un ou l'autre côté.

2. Distributeur selon la revendication 1, **caractérisé en ce que** le boîtier présente une paroi arrière (8), dans lequel un couvercle (10) en forme de capot est monté de manière à pouvoir pivoter sur la paroi arrière (8), qui recouvre sur les deux côtés le dispositif de distribution (3) et le compartiment de réception (12) dans l'état fermé et les dégage dans l'état ouvert.

3. Distributeur selon la revendication 1 ou 2, **caractérisé en ce que** le compartiment de réception (12) est disposé, lorsque le distributeur (1) est monté, dans la zone inférieure de celui-ci, entre la paroi arrière (8) et une partie inférieure, de préférence un cylindre à couteaux (4), du dispositif de distribution (3).

4. Distributeur selon l'une quelconque des revendications précédentes, **caractérisé en ce qu'**est disposée dans une paroi intérieure du compartiment de réception (12) - s'étendant autrement de préférence de manière sensiblement verticale lorsque le distributeur (1) est monté, une rainure (18) contre-dépouillée - de préférence en forme de T -, dans laquelle au moins une partie faisant saillie (33) d'une source de courant (12) peut être emboîtée, dans lequel il est prévu de préférence qu'une butée (21) pour le positionnement en profondeur d'une source de courant (28) emboîtée dans le compartiment de réception (12), de préférence une unité d'accumulateur (28B, 28C) ou un adaptateur de câble d'alimentation secteur (28D), est disposée dans une zone de la rainure (18) contre-dépouillée élargie par rapport à la petite largeur la plus étroite.

5. Distributeur selon l'une quelconque des revendications précédentes, **caractérisé en ce que** le compartiment de réception (12) présente des parois intérieures, qui s'étendent sensiblement le long des surfaces d'un prisme droit imaginaire.

6. Distributeur selon la revendication 5, **caractérisé en ce que** la surface de base du prisme est réalisée de manière asymétrique et s'écarte ainsi en particulier de la forme rectangulaire ou de la forme circulaire.

7. Distributeur selon la revendication 5 ou 6, **caractérisé en ce que** la surface de base du prisme présente un bord, qui présente des sections de bord droites (17c) et incurvées, dans lequel il est prévu de préférence que la surface de base du prisme présente un bord, qui présente des sections de bord convexes (17b) et concaves (17a).

8. Distributeur selon l'une quelconque des revendications précédentes, **caractérisé en ce qu'**au moins deux contacts de paroi (16) électriques - de préférence rigides - sont disposés dans ou sur au moins une paroi intérieure du compartiment de réception (12), par l'intermédiaire desquels des contacts de source de courant (31) peuvent être mis en contact lorsque la source de courant (28) est emboîtée dans le compartiment de réception.

9. Distributeur selon l'une quelconque des revendications précédentes, **caractérisé en ce que** la forme de section transversale du compartiment de réception (12) allongé et la forme de section transversale de la source de courant (28) allongée de préférence d'une unité de batterie (28A) correspondent au moins par endroits, de préférence en grande partie si bien que les parois extérieures de la source de courant (28) emboîtée reposent sur les parois intérieures du compartiment de réception (12) ou s'étendent le long de celles-ci.

10. Source de courant pour un distributeur selon l'une quelconque des revendications 1 à 9, dans laquelle la source de courant présente un boîtier (22) avec des parois extérieures, qui s'étendent sensiblement le long des surfaces d'un prisme droit imaginaire, dans laquelle la surface de base du prisme est réalisée de manière asymétrique et s'écarte ainsi en particulier de la forme rectangulaire et de la forme circulaire, **caractérisée en ce que** des contacts de source de courant (31) sont disposés sur une paroi extérieure, différente de la surface de base, du boîtier (22).

11. Source de courant selon la revendication 10, **caractérisée en ce que** la surface de base du prisme présente un bord, qui présente des sections de bord droites et incurvées, dans laquelle il est prévu de préférence que la surface de base du prisme présente un bord, qui présente des sections de bord convexes et concaves.

12. Source de courant selon l'une quelconque des revendications 10 ou 11, **caractérisée en ce qu'**elle présente une partie faisant saillie (33) allongée, qui peut être emboîtée dans une rainure (18) dans une paroi intérieure du compartiment de réception du distributeur.

13. Source de courant selon l'une quelconque des revendications 10 à 12, **caractérisée par** un boîtier (22) constitué de préférence de matière plastique, dans lequel au moins une batterie, un accumulateur ou une douille de branchement pour un câble d'alimentation secteur sont disposés, dans laquelle il est prévu de préférence que le boîtier (22) présente une partie inférieure (22a) et une partie de couvercle (22b), qui peuvent être assemblées l'une à l'autre par enclenchement par des éléments d'enclenchement (23, 24, 25), de préférence de telle manière que les éléments d'enclenchement (23, 24, 25) ne peuvent pas être desserrés sans destruction ou seulement au moyen d'un outil.

14. Ensemble constitué d'au moins deux sources de courant différentes selon l'une quelconque des revendications 10 à 13, pour un distributeur selon l'une quelconque des revendications 1 à 9, dans lequel les différentes sources de courant (28A - D) se distinguent dans leur forme extérieure et/ou dans le type de la source de courant - choisi parmi les types unité de batterie, unité d'accumulateur, adaptateur de câble d'alimentation secteur -.

15. Ensemble selon la revendication 14, **caractérisé en ce que** des contacts de source de courant (31) sont à disposer de manière similaire sur un boîtier (22) pour toutes les sources de courant (28A - D) de l'ensemble de telle manière qu'ils entrent en contact avec les mêmes contacts de distributeur dans le compartiment de réception.

16. Distributeur selon l'une quelconque des revendications 1 à 9 avec une source de courant selon l'une quelconque des revendications 10 à 13.
